Europäisches Patentamt

European Patent Office

Office européen des brevets

(19)

(11) Publication number: **0 088 500**
**A1**

# EUROPEAN PATENT APPLICATION

(21) Application number: **83300415.3**

(51) Int. Cl.³: **A 01 K 31/06**

(22) Date of filing: **26.01.83**

(30) Priority: **26.01.82 US 342899**

(43) Date of publication of application: **14.09.83**
Bulletin 83/37

(84) Designated Contracting States: **BE DE FR GB IT LU NL
SE**

(71) Applicant: **U.S. INDUSTRIES, INC., One Cummings Point
Road Post Office Box 10207, Stamford Connecticut (US)**

(72) Inventor: **Nijhof, Willibrordus Antonius Josephus,
Wilgenhof 22, NL-8051 VR Hattem (NL)**

(74) Representative: **Robinson, Anthony John Metcalf et al,
Kilburn & Strode 30 John Street, London, WC1N 2DD
(GB)**

(54) Poultry cage.

(57) A poultry broiler cage comprising a plurality of stacked tiers or confinement areas (20, 30, 40) each comprising a floor.(50, 70, 100) movable longitudinally between an operative position and an inverted inoperative position whereby poultry can be loaded and unloaded. Each floor is selectively responsive to a driven axle (71) and comprises low friction rails (80) on opposite sides of the confinement area; a chain (75, 76) rides and movable longitudinally along each rail. A plurality of spaced support bars (83) extend between the chains and a flexible floor material (87) extends between and is supported in trampoline-like fashion on the support bars. The floor material comprises an open-weave fabric with apertures (89) through which droppings can easily pass. Each cage tier includes an access door (120, 130) pivotal about a horizontal axis (133) located between the upper and lower edges (131a, 131b) of the door. The pivot axis is located below the inoperative position of the floor (87) immediately above the door so that when the door is opened to a horizontal position, the upper floor can be moved into and out of its inoperative position, and when the door is closed, poultry cannot escape over the door. The broiler cage further comprises a single motor-driven shaft (112) and a clutch (121) for selectively driving each floor with the same motor.

POULTRY CAGE

This invention relates to poultry cages, and more particularly to a poultry broiler cage having elongated confinement areas including floors movable longitudinally thereof.

One type of tiered poultry cage includes several elongated confinement areas positioned one directly above the other. Each confinement area includes a floor movable longitudinally with respect to the confinement area. Often the floors are formed into an endless loop configuration so that the floor material is movable between an operative, poultry-supporting position and an inverted, lower, inoperative position. When chicks are to be introduced into a confinement area, that floor is positioned in the inverted, inoperative position and while being moved to the operative position chicks are placed on the belt and thereby carried into the area. Watering and feeding devices are included in the confinement area to support the poultry during confinement. After all the chicks are loaded, the floor remains stationary until the broilers are to be withdrawn at which time the floor is driven from the operative to the inoperative position during which the broilers are transported out of the confinement area for subsequent shipment and processing.

Although these cages have many advantages, known systems also suffer several disadvantages. First, the flexible materials used for the floor material to facilitate the passage of droppings therethrough must be supported at a plurality of positions along the length of the material to prevent excessive sagging due to the weight of the poultry. Typically, this support is provided by bars extending under the floor material transverse to the direction of floor movement and carried on rollers in guide rails. This construction is relatively complicated and consequently expensive. Further, the pulling forces exerted on the endless loop to move the floor are borne entirely by the floor material, and since these pulling forces can be quite large when the floor is fully loaded with grown poultry broilers, stretching and/or damage to the floor material results or otherwise a strong and consequently expensive material is required. Further, because the material bears the full longitudinal force required to move the floor, perforations in the material allowing droppings to pass therethrough must be relatively small or few in number so as not to substantially weaken the material. However, this leads to excessive dropping accumulation on the floor, leading to breast blistering of the poultry and unsanitary conditions.

Second, each floor is typically driven by its own motor. As a practical matter, because all of the tiers terminate in a common open end of the battery, only one tier may be loaded or unloaded at a time. Consequently, the inclusion of one motor for each driven floor unnecessarily increases the cost of the cage.

Third, each tier must be provided with an access door through which poultry is introduced into and

0088500

removed from the confinement area. However, because each floor is movable between an operative position and a lower, inoperative position, the door for each tier below the upper tier interferes with the movement of the floor immediately above as it passes into its inoperative position. So far as is known, this problem has not been solved without creating another problem; for example the escape of poultry through any space between the door and the floor belt when the battery is loaded and the floor above it is in its operative confinement position.

The aforementioned problems are respectively solved by various aspects of the present invention.

According to one aspect of the present invention, a confinement area for rearing poultry includes opposed sides and a floor movable longitudinally with respect to said confinement area to load poultry into and unload poultry out of the confinement area, characterised by: first and second generally horizontal support rails secured generally opposite one another to said opposed sides of said confinement area; first and second tension pulling means extending along said first and second rails, respectively; means for moving said first and second tension means longitudinally with respect to said rails; a plurality of support bars each extending between and secured to said first and second tension pulling means; and a flexible poultry-supporting floor material supported in trampoline-like fashion between said tension pulling means, whereby movement of said tension pulling means moves the floor material.

According to a second aspect of the present invention, a battery for rearing poultry comprises: an upper cage tier including a floor movable along a path between an operative poultry supporting, upper, planar position and an inoperative, inverted lower planar position, said inoperative, lower planar position being below said operative, upper, planar position; a lower cage tier located directly below said upper cage tier, said lower cage tier including a floor and an open forward end; a door including an upper edge and a lower edge; and means for pivotally mounting said door in the open forward end about a generally horizontal axis, the axis being located below the inoperative, lower, planar position and between said upper and lower edges of said door whereby, when said door is pivoted into an open, generally horizontal position, said door is oriented generally horizontally to said planar positions so as to not interfere with movement of said upper cage floor into and out of said inoperative position; the location of said axis on the door being such that when the upper cage floor is moved into its operative position and said door is pivoted into a closed, generally vertical position, the upper edge of the door is located above said inoperative, lower planar position and said lower edge of the door is located proximate the lower tier floor to aid in retaining poultry within the lower cage tier.

According to a third aspect of the present invention, a confinement area for poultry includes a floor supported in trampoline-like fashion and comprising an elastically deformable, mesh material including a plurality of ribs defining a plurality of relatively wider apertures through which droppings can pass.

According to a fourth aspect of the present invention, a confinement area for rearing poultry comprises: a rotatable drive shaft; at least first and second rotatable axles; a first movable floor movable in response to rotation of the first axle; a second movable floor movable in response to rotation of the second axle; a first driven member operatively connected to the drive shaft and freely rotatable with respect to the first axle; a second driven member operatively connected to the drive shaft and freely rotatable with respect to the second axle; and coupling means for selectively locking either the first driven member to the first axle or the second driven member to the second axle, whereby the first and second floors can be selectively moved.

Thus according to one or more of the foregoing aspects of the invention, essentially, a tiered, poultry broiler cage is provided having movable floors wherein the longitudinal forces required to move the floors are not transmitted to the floor material. This means for moving the floors also supports the same and includes two tension members, such as endless looped tension members, located at each side of the cage with transverse support members attached to the tension members at spaced intervals. This construction enables a much wider array of materials to be used as the floor material. More particularly, a material may be used having a very significant open weave to facilitate the passage of droppings therethrough. Consequently, fewer droppings accumulate on the floor, reducing breast blistering and improving sanitation within the cage.

One material particularly well suited as a floor material in conjunction with the present invention is an elastically deformable, mesh material including a plurality of relatively narrow ribs defining a plurality of relatively larger apertures. More preferably, the ribs comprise load-bearing filaments encapsulated within a relatively soft material to provide the desired load-bearing characteristics and further reduce blistering of the poultry. The floor also eliminates the requirement that the transverse floor-supporting bars be carried on rollers on either end of each bar. The floor driving mechanism may include a clutch means to enable the selective driving of all tier floors individually from a common motor. Consequently, assembly costs of the battery are greatly reduced due to the fact that only one motor need be included regardless of the number of cage tiers and associated movable floors. Each cage tier floor is movable between an operative position and lower inoperative position and an access door is provided on each tier below the upper tier, which door when in the open position lies entirely below the floor immediately above, but when in the closed position extends above the inoperative position. Consequently, the door when pivoted to its open position does not interfere with movement of the floor immediately above between its operative and inoperative position; however, in its closed position it securely maintains the poultry within the confinement area.

The invention may be carried into practice in various ways but one poultry broiler cage embodying the invention will now be described by way of example with reference to the accompanying drawings, in which:

Figure 1 is a perspective view of the poultry broiler cage;

Figure 2 is a fragmentary, perspective view of the loading area of the poultry broiler cage;

Figure 3 is a fragmentary, perspective view of the loading area of the middle tier of the poultry broiler cage;

Figure 4 is a fragmentary, side elevational view of the poultry broiler cage;

Figure 5 is a fragmentary, sectional view of the middle tier of the poultry broiler cage taken along plane V-V in Figure 1;

Figure 6 is a fragmentary, sectional view taken along plane VI-VI in Figure 4 showing an end of a support bar secured to a chain riding in a chain guide;

Figure 7 is a fragmentary, sectional view of the area within line VII in Figure 5;

Figure 8 is a fragmentary, perspective view of the integral rear wall of a movable floor;

Figure 9 is an enlarged view of the area within boundary lines IX in Figure 1 with the grooved cap member removed from the splined axle and cocked to show its central, grooved opening;

0088500

Figure 10 is a schematic view of the upper and middle tiers with the access gates in their open position and the upper floor in its inoperative position;

Figure 11 is a schematic view of the upper and lower tiers with both floors in their operative positions and both gates closed;

Figure 12 is an exploded, schematic view of the gearing for the floor-driving axles;

Figure 13 is a fragmentary, side elevational view of the access door shown in Figure 5;

Figure 14 is a fragmentary, top plan view of the floor material;

Figure 15 is an enlarged, sectional view taken along plane XV-XV in Figure 14;

Figure 16 is a cross-sectional view of one of the clutch mechanisms like that illustrated in Figure 9 taken at and along a plane perpendicular to the axis of the grooved connection between the cap and shaft; and

Figure 17 is a cross-sectional view of one of the clutch mechanisms like that of Figures 9 and 16 taken at and along a plane perpendicular to the pin connections between the cap and a sprocket.

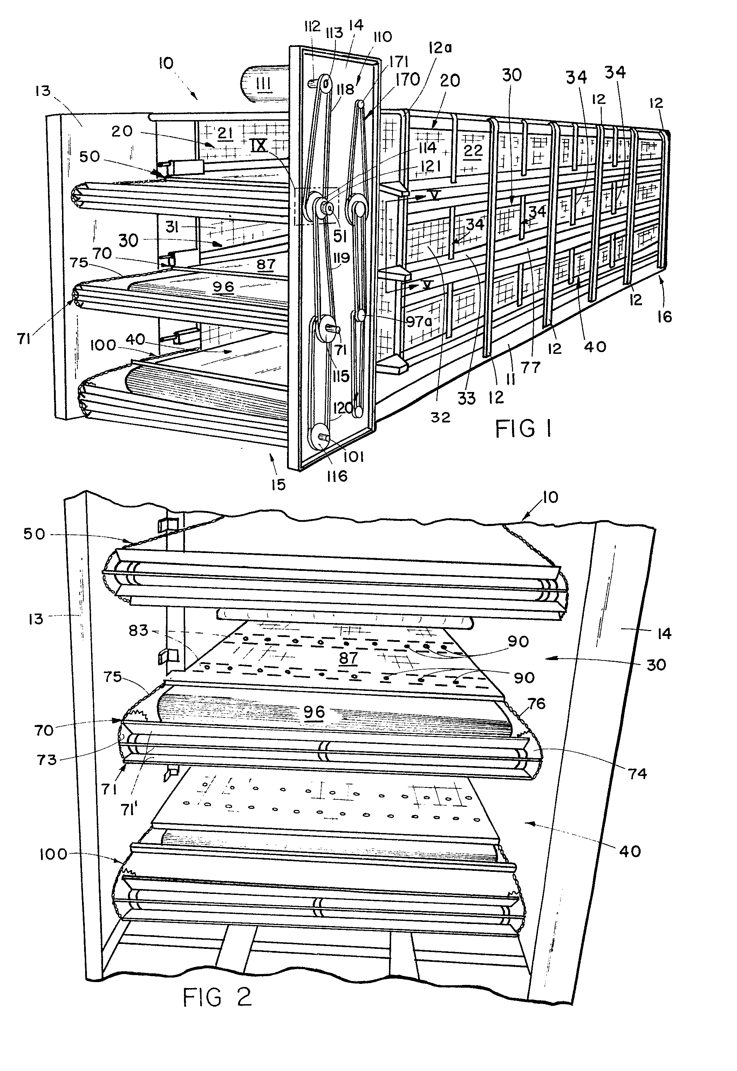

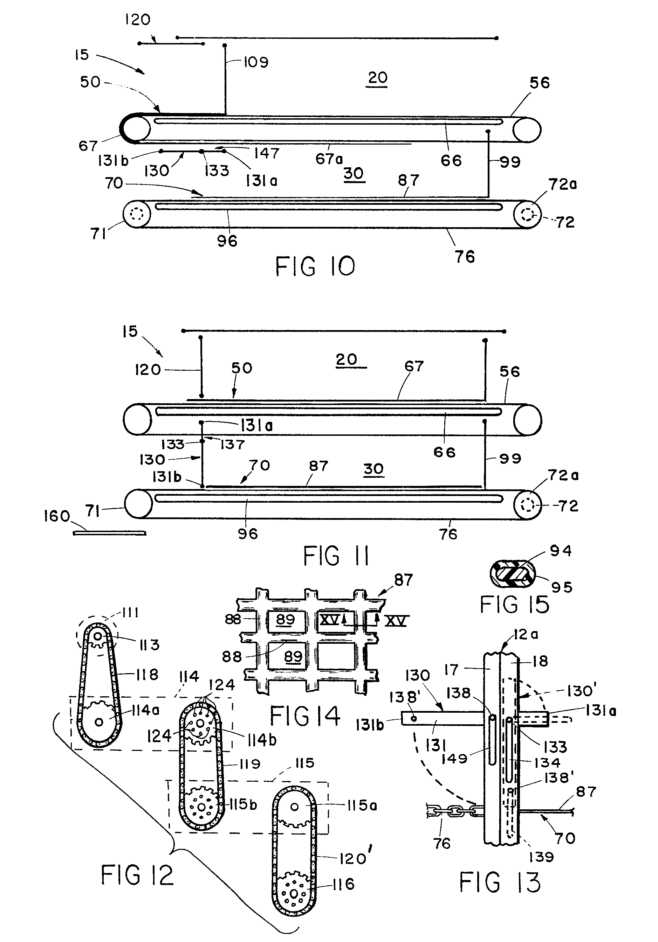

The poultry broiler cage 10 seen in Figure 1 includes upper, middle, and lower tiers, or confinement areas, 20, 30, and 40, respectively, each having a movable floor 50, 70, and 100, respectively. A drive assembly 110 selectively drives one of movable floors 50, 70, and 100 to convey poultry into or out of the associated confinement area. Finally, pivoted gates 120 and 130 (Figures 10 and 11) are mounted at the forward ends of confinement areas 50 and 70 respectively and a third pivoted gate (not shown) is mounted at the forward end of the confinement area 100 to selectively allow access to the confinement areas.

The cage 10 (Figure 1) includes a pair of base members 11 extending longitudinally of the cage and a plurality of vertical uprights 12 extending upwardly therefrom and in turn supporting the confinement areas 20, 30, and 40. The cage 10 at its forward end 15 includes a pair of support partitions 13 and 14 generally parallel to one another and extending upwardly from base members 11. The opposite, rear end of the cage 10 is denominated 16.

Confinement areas 20, 30, and 40 are generally identical to one another. Accordingly, only area 30 will be described in detail with areas 20 and 40 being the logical, equivalent extensions thereof. The middle confinement area 30 includes side walls 31 (Figure 1) and 32 (Figures 1 and 5) fabricated from a wire mesh material and pivotally supported on uprights 12 using rods 35 (Figure 5). Side 32 is generally L-shaped in cross section and includes an upper hooked end 36 through which the rod 35 passes and a positioning bar 39 at its lower end 41. A feed trough 33 is located directly below the side wall 32 and is secured to the uprights 12. A bracket 37 is also secured to each of the uprights 12 immediately above the feed trough 33 and defines an inverted U slot 38 in which the positioning bar 39 is positioned. The side 32 may be pivoted into one of two positions by the positioning bar 39, i.e. within the inner leg 38a or outer leg 38b of slot 38. When bar 39 is located within inner leg 38a, only limited access to the trough 33 is provided. This position is used when the poultry are small. However, when the bar 39 is positioned in outer leg 38b, full access by larger poultry may be had to the trough. Preferably, a watering trough is also positioned in the confinement area 30 adjacent the wall 31 as is well known in the art. A mesh side piece 42 is secured to the upright 12a and extends the full height between trough 33 and upper movable floor 50 and between upright 12a and door 130.

Movable floors 50, 70, and 100 are also generally identical to one another. Accordingly, only floor 70 will be described in detail, with floors 50 and 100 being the logical equivalent extensions thereof. Floor 70 includes a drive member or axle 71 rotatably supported between partitions 13 and 14 (Figures 1 and 2) and a rear support member or axle 72 (Figures 10 and 11). Sprockets 73 and 74 (Figure 2) are fixedly mounted on opposite ends of the axle 71 immediately proximate the partitions 13 and 14, respectively. Likewise, a sprocket 72a and another sprocket (not shown) are similarly mounted on the rear axle 72. A chain 75 is formed into an endless loop and is secured about the sprockets 73 and 72a. Similarly, a

11. 0088500

chain 76 (56 for upper tier 20) is formed into an endless loop about the sprocket 74 and the other rear sprocket (not shown) on the axle 72. Chains 75 and 76 are selected so that each alternate one of their links is engaged by one of the teeth on sprockets 73 and 74, respectively, so that the chains may be driven by rotating the axle 71. Reinforcement fins 71' extend radially from the axle 71 and are secured between the sprockets 73 and 74.

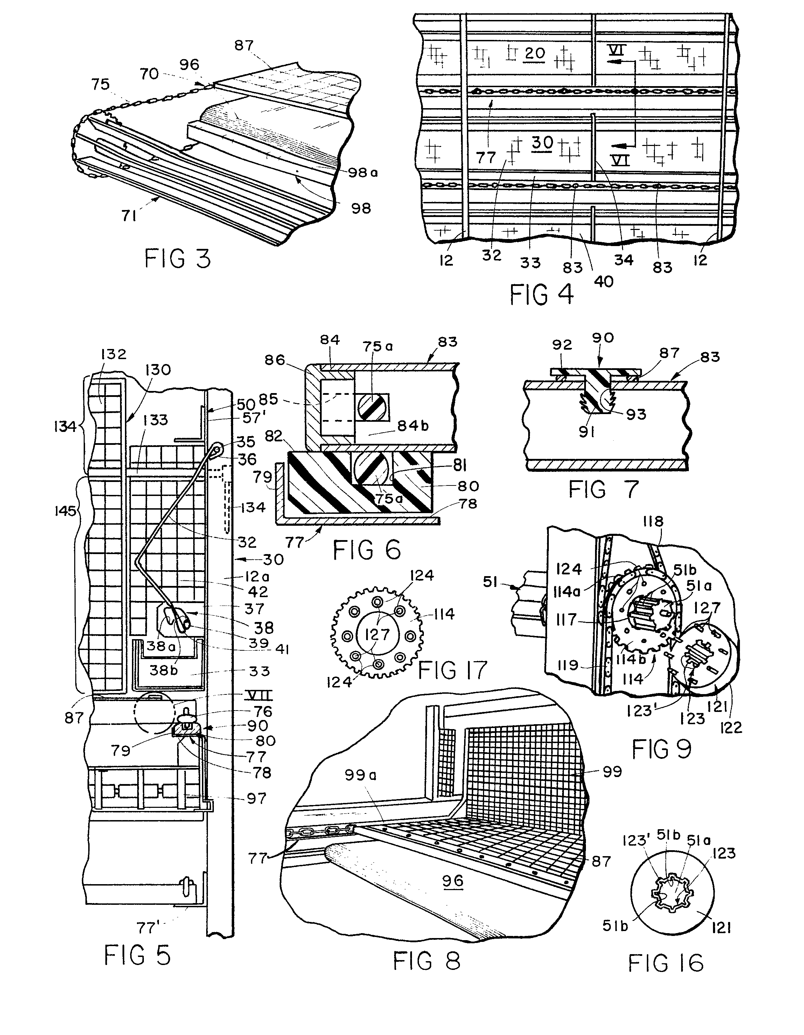

A support iron 77 (Figures 4, 5 and 8) extends the full length of the cage 10 and is secured to the vertical uprights 12. The support iron 77 includes a horizontal portion 78 (Figure 5) and a vertical retaining flange 79 extending upwardly from the terminal edge thereof. A chain guide 80 (Figures 5 and 6) is secured to the flange 78 of the support iron 77 and also extends the full length of the cage 10. Preferably, the chain guide 80 is fabricated from a material having a relatively low coefficient of friction, for example a plastic such as nylon or vinyl. The guide 80 includes an upwardly opening channel 81 (Figure 6), generally square in cross section, and an upper load-bearing surface 82.

A plurality of support bars 83 (Figures 2, 3, 4, 6, and 7) extend between and are secured to the chains 75 and 76. Each of support bars 83 is an elongated, hollow member generally circular in cross section and includes a pair of opposed ends (Figure 6). End 84 defines a slot 85 extending longitudinally into the bar 83 and having a width generally the same as the thickness of one of the chain links 75a. Bar 83 is secured to the chain 75 by sliding the slot 85 about the chain link 75a so that a lower portion 84b of the bar end 84 actually passes through the centre of the link 75a. The bar 83 is secured in position by press fitting a cap 86 into the bar end 84, entrapping the link 75a within the slot 85. The opposite end of the bar 83 is secured to the chain 76 in an analogous manner. Consequently, when the chains 75 and 76 are moved longitudinally with respect to the cage 10, the support bars 83 are also transported longitudinally within the cage. Both chain 75 and bar ends 84 ride on the chain guide 80 as will be described. A return rail 77' (Figure 5) extends the full length of the cage 10 below the support rail 77 and is secured to the vertical uprights 12 to support the chain 76, bars 83, and floor material 87 in their inverted, lower, inoperative position.

The floor material 87 (Figures 1, 2, 3, 7, 8, 11 and 14) (67 in the case of the upper movable floor 50) is supported on the bars 83 in trampoline-like fashion and secured thereto. As most clearly shown in Figure 14, the material 87 is an elastically deformable mesh comprising a plurality of ribs 88 defining a plurality of generally rectangular apertures 89. As seen in Figures 2 and 7, the material 87 is secured to the bars 83 using push fit plugs 90, each of which includes a barbed stem 91 and a relatively large diameter head 92. The diameter of the head 92 is selected to be wider than the apertures 89.  A plurality of apertures 93 are located along the upper surface of each of the bars 83.  One of plugs 90, and more particularly its barbed stem 91, extends through apertures 89 in the material 87 to secure the material 87 to bar 83.  When the plug 90 is installed, ribs 88 are entrapped between the bar 83 and the plug head 92.  Material 87 comprises a load-bearing filament mesh 94 encapsulated within a soft material 95 (Figure 15).  In the preferred embodiment, the load-bearing filaments are fabricated from polyester, and the encapsulating material is a polyvinyl chloride having a relatively low durometer.  In the preferred embodiment, each of the ribs 88 is approximately 3mm wide;  and each of the apertures 89 has dimensions of approximately 10mm by 12mm; the fabric has a weight of approximately 300 grams per square metre; and the ribs have a tensile strength of 120 kilograms per five centimetres.  The floor material 67 extends only over rather less than half the total length of the chains 75, 76.

An integral end wall 99 (Figures 8, 10, and 11) is mounted on the chains 75 and 76 for movement therewith at the rear end of the floor material 87. A pair of L-shaped brackets 99a are secured to and between the chains and the end wall 99 to support the end wall in a generally perpendicular relationship to floor material 87.

An endless manure belt 96 (Figures 1, 2, 3, 5, 8, 10, and 11) (66 for upper tier 20) is supported on a plurality of rollers 97 (Figure 5) located at a plurality of positions along the length of the cage 10. The forwardmost roller 97a (Figure 1) is driven by a drive assembly 170 to operate the belt 96, and convey droppings accumulated thereon out of the confinement area. The assembly 170 drives all of the manure belts together. An L-shaped scraper 98 (Figure 3) is supported between the partitions 13 and 14 and has one of its legs 98a biased against the manure belt as it passes over the roller 97 to aid in removing droppings from the belt.

The means for driving and moving the floors is best shown in Figures 1, 9 and 12 wherein the drive assembly 110 is shown supported on the support partition 13. As seen in Figure 1, a motor and gear reducer assembly 111 drives a shaft 112 which in turn is operatively connected by means of a sprocket 113 through chains 118, 119, and 120' to sprocket assemblies 114, 115 and 116. These assemblies are freely rotatable about their associated axles 51, 71, and 101, respectively, and when the motor of the assembly 110 is running the sprocket assemblies 114, 115, and 116 are rotated. However, each sprocket assembly is capable of being selectively locked to its associated axle by a clutch cap 121 causing the motor assembly 110 to drive the floor associated with such axle.

Figures 9, 12, 16, and 17 show the details of the clutch mechanism, it being understood that Figures 9, 16, and 17 disclose only the mechanism for axle 51 since the structure of the clutch mechanisms for axles 71 and 101 will be evident therefrom. Referring to Figures 9 and 12, reference numbers 114a and 114b designate sprockets connected together and forming the double row sprocket assembly 114. Chain 118 engages sprocket 114a to drive the sprocket assembly and chain 119 engages sprocket 114b so as to drive sprocket assembly 115. Sprocket assembly 114 is freely rotatably mounted on the end portion 51a of the axle 51 and is held thereon by a retainer ring 117. The end portion 51a includes a plurality of splines 51b.

A clutch cap 121 (Figure 9) is provided to lock the sprocket assembly 114 to the axle 51. This is accomplished by the central grooved aperture 123 in cap 121, the grooves being designated by reference numeral 123' and adapted to receive the splines 51b. Further, the cap 121 has a plurality of spaced pins 127 which extend from its inner face and which are adapted to be received in pin apertures 124 in the outer side of the sprocket 114b. Thus, when the cap 121 is inserted over the end 51a of the axle 51, the sprocket assembly 114 is locked to the axle 51 causing the motor assembly 110, when operated, to drive the axle 51 and its associated floor.

Now referring to Figure 12 which diagrammatically demonstrates the relationship between the various sprocket assemblies, it will be noted that, as described above, sprocket 114b is operatively connected to sprocket 115b and sprocket 115a to sprocket 116.

Thus, whenever sprocket 113 is driven by operation of motor 111, all the sprockets are rotating; however, none of the axles 51, 71, and 101 is rotated until a clutch cap 121 is fitted over the end of one of the axles. When so fitted, the cap 121 couples the selected sprocket assembly 114, 115, or 116 to its associated axle 51, 71, or 101, respectively.

As previously set forth, when all the poultry have been loaded on one of the confinement areas such as areas 20 and 30 (Figures 1 and 4), the doors 120 and 130, respectively, are provided to close off the ends of the confinement areas. As shown in Figures 10 and 11, door 120 is pivoted along its top edge. However, door 130 has a special construction and pivotal arrangement. It includes a generally rectangular frame 131 (Figures 5 and 13) having an upper edge 131a and a lower edge 131b and supporting a generally planar wire mesh material 132 thereon (Figure 5). A generally horizontal pivot rod 133 secured to the side of the door 130 extends through the frame 131 and the vertical upright member 12a. As most clearly seen in Figure 5, the rod 133 is located between the upper edge 131a and lower edge 131b of the door and is pivoted below the upper movable floor material 67a when it is in its inoperative position so that when pivoted by a handle 134 to the horizontal position (Figure 10) sufficient clearance is provided for the floor to be positioned thereover. This permits the upper movable floor 50 to freely move between its operative and inoperative positions above

0088500

the open door. However, when door 130 is pivoted
to its closed, vertical position (Figure 11) the door
prevents access to or exit from the confinement
area 30 since its upper edge 131a is located above
the inoperative position of the movable floor 50
and more preferably proximate the manure belt 66,
while the lower edge 131b is located proximate the
middle movable floor 70.

Figure 13 shows the locking mechanism for the
door 130. The vertical upright 12a is in actuality
a pair of side-by-side uprights 17 and 18. Pivot
rod 133 extends through vertical upright member 18.
Door 130 is shown in its open position, with the
closed position shown in phantom. When door 130 is
pivoted to its open, substantially horizontal
position by turning handle 134, a pair of apertures
138 in frame 131 and vertical upright member 17 align
with one another so that an L-shaped key 139 may be
inserted therethrough to hold the door in this
position. When the key 139 is removed from the apertures 138, the door 130 pivots to its closed, substantially vertical position, wherein apertuers 138'
in frame 131 and vertical upright member 18 align.
Key 139 may then be inserted through aligned apertures
138' to lock the door 130 in its closed position.

### Operation

Cage 10 is most efficiently loaded with chicks
beginning with the upper confinement area 20 and
proceeding thereafter to the middle area 30 and
finally the lower area 40. To prepare the confinement areas for loading, all of the access doors, for example 130, are pivoted to their open, horizontal positions (Figure 10) and locked, for example by inserting the key 139 through aligned apertures 138. Movable floor 50 is moved to its inoperative position (Figure 10) with end wall 109 generally proximate access door 120. If floor 50 is not in this position when the loading operation is to begin, clutch cap 121 is installed on axle 51 so that its grooved central opening 123 interfits with the splined axle 51a and the studs 127 extend into the sprocket holes 124 in the sprocket assembly 114 (see also Figure 9) locking the axle 51 to the sprocket 114. Motor 111 is then actuated so that the sprocket 113 rotates in a counterclockwise direction (all directions of rotation taken with respect to Figure 1) so that the sprocket assembly 114 and axle 51 rotate in unison in a counterclockwise direction, moving the end wall 109 towards the forward end 15 of the cage 10 until in the position shown in Figure 10. At this point, a majority 67a of the upper floor material 67 is in an inoperative, inverted, lower position. The side walls 21 and 22 of the upper tier are moved inwardly toward one another to prevent chicks from falling into the feed and water troughs.

It should be noted that when the drive shaft 112 and drive sprocket 113 are driven in a given direction, sprocket assemblies 114, 115, and 116, which are directly connected to the drive sprocket 113 through chains 118, 119, and 120', all rotate in that same direction.

To load the upper area 20, the motor 111 is driven in a clockwise direction so that the sprocket 113, sprocket assembly 114 and axle 51 are driven in a clockwise direction moving the end wall 109 away from the forward end 15 and conveying the floor material 67 into its operative position (see Figure 11). As the floor 50 is conveyed beyond the open end 15 into the confinement area 20, chicks are spread on the floor material 67 and carried into the confinement area with the movable floor. When the floor 50 is in its fully operative position as shown in Figure 11, the access door 120 is pivoted downwardly into its closed, vertical position confining the chicks within the area 20.

To load the confinement area 30, the access door 130 is left in its open, horizontal position as shown in Figure 10. The clutch cap 121 is then removed from the axle end 51a and positioned over the axle end 71a to lock the double row sprocket assembly 115 and axle 71 together. The motor 111 is then actuated to drive the sprocket 113 in a counterclockwise direction, which drives the sprocket assembly 115 and axle 71 also in a counterclockwise direction through chains 118 and 119 and sprocket assembly 114 to withdraw the floor material 87 from the confinement area 30 until the end wall 99 is proximate the access door 130. The side walls 31 and 32 are then moved inwardly to prevent chicks from falling into the feed trough 33 and the water trough. The side wall 32 is so positioned by placing the bar 39 in the inner leg 38a of the slot 38.

The motor 111 is then reversed, driving the sprocket 113 in a clockwise direction, which through chains 118 and 119 and sprocket assembly 114 also drives the sprocket assembly 115 and axle 71 in a clockwise direction, moving the end wall 99 to the rear of the confinement area 30. As the floor material 87 is conveyed past the forward end 15 and into the confinement area, chicks are placed on the floor supporting material 87 and carried into the confinement area with the floor. When the floor 70 has been moved to its fully operative position (Figure 11), the key 139 is withdrawn from apertures 138 so that the access door 130 can pivot into its closed, vertical position about the rod 133. The key 139 is then inserted through the apertures 138' to lock the door in position. When fully closed, the lower edge 131b of the door 130 is proximate the floor material 87 and the upper edge 131a of the door is proximate the upper manure belt 66. Consequently, the access door 130, end wall 99, and side walls 31 and 32 secure the chicks within the confinement area.

The same procedure as immediately above described is repeated for filling the lower confinement area 40.

It should be understood that in the above filling operation, as axle 71 is driven in a clockwise direction, chain sprockets 73 and 74 engage chains 75 and 76, respectively to draw the floor material 87 into confinement area 30. Because the chains 75 and 76 ride on the low friction guide channels 80, the movement of the chains is greatly facilitated.

0088500

As seen in Figure 6, the bar ends 84 ride on the upper surface 82 of the low friction channel 80 to further reduce drag on the moving floor 70. The lower half of each alternate chain link 75 is positioned within the channel 81 to properly orient the chain on the channel. Because the support bars 83 are secured to and between the chains 75 and 76, the longitudinal forces required to move the floor are borne by the chains 75 and 76 and support bars 83, and not by the floor material 87. Consequently, the floor material is not stretched or damaged and need not be strong enough to withstand the longitudinal forces required to move the loaded floor into and out of the confinement area. This enables the use of a fabric material having a relatively large mesh (see Figure 14) to facilitate the passage of droppings therethrough and onto the manure belt 96. Further, because the material 87 is encapsulated within a polyvinyl chloride 95, droppings do not adhere to the floor material 87, additionally facilitating the passage of droppings. Because droppings do not significantly accumulate on the floor material 87, breast blistering of the poultry is reduced.

The poultry is left within the confinement areas 20, 30, and 40 until fully grown. Water and feed are introduced into the cage in any conventional manner through the feed trough 33 and the water trough (not shown) to provide nourishment to the poultry. The sides of the confinement areas are moved outwardly after the poultry has attained a certain size to allow greater access to the feed troughs. Droppings pass through the floors 50, 70, and 100 onto the manure belts 66 and 96. Periodically, the drive assembly 170 is actuated to convey manure to the forward end 15 of the cage 10 where the manure may be collected. Manure scrapers, for example 98 (Figure 3) facilitate removal of the manure from the belts.

When the poultry is fully grown, the movable floors are driven in a reverse direction to move the poultry out of the confinement areas and onto a transverse conveyor 160 (see Figure 11) for subsequent processing. Preferably, the conveyor 160 is suspended from the ceiling of the poultry house so that the conveyor may be positioned proximate any one of the axles 51, 71, and 101.

Preferably, the lower confinement area 40 is first unloaded in a manner analogous to the confinement area 30, which will now be described in relation to area 30 and access door 130. The access door 130 of confinement area 30 is pivoted to its open, horizontal position by first withdrawing the key 139 from the aligned apertures 138' and rotating the handle 134 causing the door 130 to also rotate. When the apertures 138 in the vertical upright member 17 and the door frame 131 are aligned, the key 139 is inserted therethrough to maintain the door in its open position. The clutch cap 121 is then slid onto the splined axle end so that the studs 127 are positioned in the sprocket holes 125, and the motor 111 is actuated to drive the sprocket 113 in a counterclockwise direction, which through chains 118 and 119 and sprocket assembly 114 also drives sprocket assembly 115 and axle 71 in a counterclockwise direction. This moves the floor material 87 out of the confinement area 30 and past the forward end 15 to deposit the poultry on the transverse belt 160. The end wall 99 moves with the floor 70 to urge the poultry out of the confinement area. When the floor 70 is moved to its fully inoperative position with the end wall 99 proximate the door 130, a few birds will remain on the floor material 87 located between the end wall 99 and the axle 71. These birds may be removed by shooing them onto the transverse conveyor 160 or by physically picking them up and placing them on the conveyor. Transverse conveyor 160 is then placed immediately adjacent and slightly below the axle 51 and the confinement area 20 is unloaded in a similar manner. When the middle access door 130 is in its open, horizontal position, the floor material 67a is free to pass immediately above the door between the operative and inoperative positions.

0088500

## CLAIMS

1. A confinement area (30) for rearing poultry including opposed sides (31, 32) and a floor (70) movable longitudinally with respect to said confinement area to load poultry into and unload poultry out of the confinement area, characterised by:

first and second generally horizontal support rails (80) secured generally opposite one another to said opposed sides of said confinement area;

first and second tension pulling means (75, 76) extending along said first and second rails, respectively;

means (111, 113, 118, 119, 71) for moving said first and second tension means longitudinally with respect to said rails;

a plurality of support bars (83) each extending between and secured to said first and second chain pulling means (75, 76); and

a flexible poultry-supporting floor material (87) supported in trampoline-like fashion between said tension pulling means, whereby movement of said tension pulling means moves the floor material.

2. A confinement area according to Claim 1 in which the floor material is supported on and secured to the support bars (83).

3. A confinement area according to Claim 1 or Claim 2 in which the rails (80) comprise a material having a generally low coefficient of friction and the tension pulling means (75, 76) are chains supported by the said material.

0088500

4.    A confinement area according to Claim 3 in
which opposite ends (84) of the support bars (83)
are supported by the said low friction material of the
support rails (80).

5.    A confinement area according to Claim 3 or
Claim 4 in which the support rails (80) are grooved
and the chains (75, 76) ride in the grooves.

6.    A confinement area according to Claim 5 in
which each end (84) of each support bar (83) defines
a slot (85) and a link of one of the chains (75, 76)
is positioned within each slot.

7.    A confinement area according to any of
Claims 1 to 6 in which the tension pulling means (75,
76) are formed into endless loops to convey the poultry-
supporting material (87) between an operative position
and a lower, inverted, inoperative position.

8.    A confinement area according to Claim 7
which includes third and fourth rails (77') positioned
directly below the first and second rails (80), respectively, for supporting the tension pulling means in
their inoperative, inverted positions.

9.    A battery (10) for rearing poultry comprising:
    an upper cage tier (20) including a floor (50)
movable along a path between an operative poultry
supporting, upper, planar position and an inoperative,
inverted lower planar position, said inoperative,
lower planar position being below said operative, upper,
planar position;

a lower cage tier (30) located directly below said upper cage tier (20), said lower cage tier including a floor (70) and an open forward end;

a door (130) including an upper edge (131a) and a lower edge (131b);  and

means (133) for pivotally mounting said door in the open forward end about a generally horizontal axis, the axis being located below the inoperative, lower, planar position and between said upper and lower edges of said door whereby, when said door is pivoted into an open, generally horizontal position (Figure 10), said door is oriented generally horizontally to said planar positions so as to not interfere with movement of said upper cage floor (50) into and out of said inoperative position;  the location of said axis on the door being such that when the upper cage floor (50) is moved into its operative position and said door is pivoted into a closed, generally vertical position (Figure 11), the upper edge (131a) of the door is located above said inoperative, lower planar position and said lower edge (131b) of the door is located proximate the lower tier floor to aid in retaining poultry within the lower cage tier.

10.  A battery according to Claim 9 which includes means (66) for collecting droppings from the upper tier, the collecting means being located between the said upper and lower planar positions, the upper edge (131a) of the door (130) being located proximate the collecting means (66) when the door is in the closed position.

11.   A battery according to Claim 9 or Claim 10
which includes means for selectively locking the door
in the open and closed positions, the locking means
comprising a pin (139) insertable through an aperture
in the door and either of two apertures (138, 138')
in an adjacent frame member.

12.   A confinement area for poultry including
a floor (67) supported in trampoline-like fashion and
comprising an elastically deformable, mesh material
including a plurality of ribs (88) defining a plurality
of relatively wider apertures (89) through which
droppings can pass.

13.   A confinement area for poultry according to
Claim 13 in which the ribs comprise load-bearing
filaments (94) encased within a soft material (95) to
reduce blistering on poultry within said cage.

14.   A confinement area according to Claim 13 in
which the load-bearing filaments (94) comprise woven
polyester, and the soft encasing material (95) comprises
polyvinyl chloride having a relatively low durometer.

15.   A confinement area according to any of Claims
12 to 14 in which the ribs (88) are approximately three
millimetres wide and each of the apertures (89) is
approximately ten by twelve millimetres.

16.   A confinement area for rearing poultry
comprising:
    a rotatable drive shaft (112);
    at least first and second rotatable axles (51,
71);
    a first movable floor (50) movable in response to
rotation of the first axle (51);

0088500

a second movable floor (70) movable in response to rotation of the second axle (71);

a first driven member (114a) operatively connected to the drive shaft and freely rotatable with respect to the first axle;

a second driven member (115b) operatively connected to the drive shaft and freely rotatable with respect to the second axle; and

coupling means (121) for selectively locking either the first driven member to the first axle or the second driven member to the second axle, whereby the first and second floors can be selectively moved.

17.   A confinement area according to Claim 16 in which the first and second driven members (114a, 115a) are rotatably mounted on ends of the first axle (51) and second axle (71), respectively, and in which the coupling means (121) comprises:

a cap defining a central opening (123) dimensioned to fit about and lock to an end portion of either the first or second axle;

second coupling means (127, 124) for maintaining the cap and the first driven member in fixed angular relation when the cap is fitted about and locked to the first axle; and

third coupling means for maintaining the cap and the second driven member in fixed angular position when the cap is fitted about and locked to the second axle.

18.   A confinement area according to Claim 17 in which said second and third coupling means comprises one of the cap and the first and second driven members having aperture means (124) and a pin

0088500

means (127) extending from the other of the cap and first and second driven members into the apertures.

19.　A confinement area according to Claim 17 or Claim 18 which includes a longitudinal spline means (51b) extending radially from said portions of said first and second axles, the cap defining a groove means in the central opening (123) dimensioned to receive the spline means.

20.　A confinement area according to any of Claims 16 to 19 in which the first and second driven members comprise sprocket means, the operable connection between the first driven member and the drive shaft includes chain means, the first driven member comprises a first double row sprocket, the second driven member comprises at least one second sprocket, and the operable connection between the second sprocket of the second driven member and the drive shaft includes a second chain mounted about one of the said sprockets of the said double row sprocket and the said second sprocket.

FIG I

FIG 2

0088500

FIG 3

FIG 4

FIG 5

FIG 6

FIG 7

FIG 8

FIG 9

FIG 16

FIG 17

FIG 10

FIG 11

FIG 12

FIG 14

FIG 15

FIG 13

0088500

0088500

European Patent
Office

**EUROPEAN SEARCH REPORT**

Application number

EP 83 30 0415

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | DE-A-2 555 357 (SCHMIDT-ANKUM AGRAR- UND ZWECKBAU) <br> * Entire document * | 1,2,7-10,16 | A 01 K 31/06 |
| Y | US-A-2 186 009 (R.R. CLARK et al.) <br> * Page 2, lines 51-75; figures 1, 6, 21 * | 1 | |
| A | US-A-4 020 793 (J.R. MORRISON) <br> * Abstract; figures 3-6 * | 1 | |
| A | DE-A-2 108 251 (R.J. PATCHETT LTD.) <br> * Page 3, lines 5-14; figure 1 * | 12,13 | |
| A | US-A-3 641 983 (E.M. KEEN et al.) <br> * Abstract; figure 1 * | 12 | TECHNICAL FIELDS SEARCHED (Int. Cl. ³) <br><br> A 01 K 31/00 |

The present search report has been drawn up for all claims

| Place of search <br> BERLIN | Date of completion of the search <br> 15-04-1983 | Examiner <br> SCHOFER G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82